**Europäisches Patentamt**

**European Patent Office**

**Office européen des brevets**

(19)

(11) Veröffentlichungsnummer : **0 012 394**
**B1**

(12) **EUROPÄISCHE PATENTSCHRIFT**

(45) Veröffentlichungstag der Patentschrift :
16.02.83

(21) Anmeldenummer : 79105005.7

(22) Anmeldetag : 07.12.79

(51) Int. Cl.³ : **H 04 L 7/04, H 04 B 12/00**

(54) **Empfangsschaltung für die Synchronisierung eines Pseudozufallsgenerators mit einem von einem Sender ausgesandten Empfangssignal.**

(30) Priorität : 19.12.78 DE 2854832

(43) Veröffentlichungstag der Anmeldung :
25.06.80 Patentblatt 80/13

(45) Bekanntmachung des Hinweises auf die Patenterteilung : 16.02.83 Patentblatt 83/07

(84) Benannte Vertragsstaaten :
BE FR GB IT NL

(56) Entgegenhaltungen :
GB A 2 005 115
US A 3 305 636
US A 3 401 342
IEEE TRANSACTIONS ON COMMUNICATION TECHNOLOGY, Vol. COM-15, Nr. 1, Februar 1967, Seiten 69-78 New York, U.S.A. R.B. WARD : « Digital Communications on a Pseudonoise Tracking Link Using Sequence Inversion Modulation »
THE RADIO AND ELECTRONIC ENGINEER, Vol. 49, Nr. 6, Juni 1979, Seiten 306-310 A.C. DAVIES et al. : « Synchronization of a spread-spectrum receiver by a microprocessor control system »

(73) Patentinhaber : **SIEMENS AKTIENGESELLSCHAFT**
**Berlin und München Wittelsbacherplatz 2**
**D-8000 München 2 (DE)**

(72) Erfinder : **Baier, Paul Walter, Prof. Dr.**
**Burgunderstrasse 6**
**D-6750 Kaiserslautern 32 (DE)**
Erfinder : **Dostert, Klaus, Dipl.-Ing.**
**Spinozastrasse 18**
**D-6750 Kaiserslautern (DE)**
Erfinder : **Pandit, Madhukar, Prof. Dr.**
**Im Starennest 24**
**D-6750 Kaiserslautern (DE)**
Erfinder : **Simons, Reinhard, Dipl.-Ing.**
**Steinstrasse 25**
**D-6750 Kaiserslautern (DE)**

EP 0 012 394 B1

Jouve, 18, rue St-Denis, 75001 Paris, France

### Empfangsschaltung für die Synchronisierung eines Pseudozufallsgenerators mit einem von einem Sender ausgesandten Empfangssignal

Die Erfindung bezieht sich auf eine Empfangsschaltung für die Synchronisierung eines Pseudozufallsgenerators mit einem von einem Sender stammenden Empfangssignal in einem störunterdrückenden Nachrichtenübertragungssystem mit schmalbandiger konventioneller Nachrichtenmodulation und zusätzlicher pseudozufälliger Phasensprungmodulation, wobei die sich fortlaufend wiederholende Pseudozufallsfolge des Pseudozufallsgenerators in Übereinstimmung mit der sendeseitigen Pseudozufallsfolge aus einer scheinbar zufälligen Aneinanderreihung der binären Werte L und H in einem festen Taktschema besteht und einen die sendeseitig aufgebrachte Phasensprungmodulation rückgängig machenden Phasenumtaster betätigt, und mit einem angepaßten Filter oder Korrelationsnetzwerk, z. B. einer angezapften Verzögerungseinrichtung oder einem Konvolver, zur Erzeugung eines Korrelationsimpulses, der immer dann auftritt, wenn die im Empfangssignal enthaltene Pseudozufallsfolge eine bestimmte Stelle des Pseudozufallscodes erreicht, oder wenn das Faltungsintegral der im Empfangssignal enthaltenen Pseudozufallsfolge und der empfängerseitig erzeugten Pseudozufallsfolge ein Maximum annimmt.

Die pseudozufällige Phasensprungmodulation wird auch häufig PN-PSK (Pseudonoise-Phase Shift Keying) genannt.

Störunterdrückende PN-PSK-Nachrichtenübertragungssysteme sind beispielsweise im Aufsatz von W.P. Baier : « Überlegungen zu störsicheren drahtlosen Nachrichtenübertragungssystemen » in der Zeitschrift « Siemens Forschungs- und Entwicklungs-Berichte », 4, 1975, Seiten 61 bis 67 beschrieben. Ein solches störsicheres Nachrichtenübertragungssystem basiert auf einem konventionellen Nachrichtenübertragungssystem, das beispielsweise analoge Frequenzmodulation, digitale Frequenzmodulation oder digitale Phasenmodulation verwendet. Durch zusätzliche Frequenz- oder Phasensprünge im Rhytmus einer raschen binären Pseudozufallsfolge wird eine erhebliche Spreizung der Bandbreite bewirkt. Solche Nachrichtenübertragungssysteme werden als Spread-Spectrum-Nachrichtenübertragungssysteme bezeichnet.

In « IEEE Transactions on Communication Technology », Vol. COM-15, Nr 1, Februar 1967, Seiten 69 bis 78 ist eine PN-PSK-Empfangsschaltung beschrieben, die zur Synchronisierung des Pseudozufallsgenerators eine Regelschleife mit Korrelationsnetzwerk in Form einer Verzögerungseinrichtung aufweist.

Das Signal am Empfängereingang von Spread-Spectrum-Nachrichtenübertragungssystemen mit pseudozufälliger Phasensprungmodulation (PN-PSK) hat die Form

$$e\,(t) = A \cdot \underbrace{p(t) \cdot \cos\,[\omega_1 6 + \varphi(t)]}_{s_1(t)} + n_1(t) \qquad (1)$$

Die in der Gleichung (1) auftretenden Größen haben folgende Bedeutung :
A : Amplitude
$p(t)$ : binäre Pseudozufallsfolge $p(t)\varepsilon$ $\{-1,\,1\}$ mit der Taktfrequenz $f_c$
t : Zeit
$\omega_1$ : Trägerkreisfrequenz
$\varphi(t)$ : gegenüber der Taktfrequenz $f_c$ schmalbandige analoge oder digitale Phasen- oder Frequenzmodulation (Nachrichtenmodulation)
$s_1(t)$ : empfangenes Nutzsignal
$n_1(t)$ : empfangenes Störsignal.

Die empfängerseitige Verarbeitung von Spread-Spectrum-Signalen nach der Gleichung (1) kann mittels angepaßter Filter erfolgen. Hinderlich hierbei ist jedoch, daß das empfangene Nutzsignal $s_1(t)$ neben der im Empfänger bekannten Pseudozufallsfolge $p(t)$ eine im Empfänger nicht a priori bekannte Nachrichtenmodulation $\varphi(t)$ enthält, so daß ein eindeutiger Entwurf eines angepaßten Filters nicht möglich ist.

In der US-Patentschrift 3 305 636 ist bereits erkannt worden, daß sich bei der Synchronisierung des auf der Empfangsseite erzeugten Pseudozufallscodes Schwierigkeiten wegen des Vorhandenseins einer Digitaldatenmodulation ergeben. Es wurde zu diesem Zweck versucht, mittels einer Rückkopplungsschleife die Digitaldatenmodulation zu beseitigen. Allerdings handelt es sich hierbei um ein besonderes Digitaldatenübertragungssystem mit einem Takt, dem sendeseitig synchron zu den Taktsignalen sowohl der Pseudozufallscode als auch das digitale Datensignal aufmoduliert werden. Auf der Empfangsseite müssen deswegen für eine geeignete Korrelation des dort erzeugten Pseudozufallscodes Mittel vorhanden sein, um das doppelt modulierte Taktsignal von der Digitaldatenmodulation zu befreien. Für taktunabhängige Nachrichtenmodulationsformen ist die aus dieser US-Patentschrift bekannte Methode zur Ableitung eines Korrelationsfehlersignals nicht geeignet.

Eine Möglichkeit, den störenden Einfluß der Nachrichtenmodulation auf die Funktion des angepaßten Filters bzw. Korrelators gering zu halten, besteht darin, eine hinreichend schmalbandige Nachrichten-

modulation $\varphi(t)$ zu verwenden. Dadurch ist man jedoch in der Möglichkeit einer im Hinblick auf die Störunterdrückung im Nachrichtenkanal optimalen Systemauslegung eingeengt.

Angepaßte Filter für Signale mit pseudozufälliger Phasensprungmodulation kann man beispielsweise mit angezapften Verzögerungsleitungen für akustische Oberflächenwellen realisieren, vgl. den Aufsatz von D.T. Bell et al., « Application of Acoustic Surface-Wave Technology to Spread Spectrum Communications », in der Zeitschrift « IEEE Trans. Microwave Theory Techn. », Vol. MTT-21 (1973), S. 263-271. Im Interesse möglichst großer Störunterdrückung sollte die angezapfte Verzögerungsleitung eine möglichst große Gesamtverzögerungszeit $T$ und damit möglichst viele Anzapfungen haben. Andererseits wächst mit der Gesamtverzögerungszeit $T$ die durch eine Nachrichtenmodulation $\varphi(t)$ vorgegebener Bandbreite bewirkte Degradation. Mit der Bandbreite B des Signals $\cos[\omega_1 t + \varphi(t)]$ ist die maximal sinnvolle Verzögerungszeit etwa durch

$$T \approx 1/B \qquad (2)$$

gegeben. Der störende Einfluß der Nachrichtenmodulation läßt sich somit auch dadurch niedrig halten, daß man Verzögerungseinrichtungen bzw. Convolver mit einer hinreichend kleinen Verzögerungszeit wählt. Dadurch ist man in der Möglichkeit einer bezüglich der Empfängersynchronisation möglichst störsicheren Systemauslegung aber eingeschränkt. Bei einer Vergrößerung von $T$ wesentlich über 1/B hinaus wird kein Gewinn an Signal-Stör-Verhältnis mehr erzielt. Es kommt vielmehr wieder zu einer Verringerung (Degradation) des Signal-Stör-Verhältnisses. Nur im Falle B = 0, d. h. bei $\varphi(t) = 0$, nähme die Störabstandsverbesserung mit wachsendem $T$ stetig zu.

Die durch die Gleichung (2) ausgedrückte Einschränkung würde also entfallen, wenn im Empfangssignal $e(t)$ keine Nachrichtenmodulation enthalten wäre, d. h. $\varphi(t) = 0$. Dies ist allerdings nicht realistisch.

Aufgabe der Erfindung ist es, in einem störunterdrückenden Spread-Spectrum-Nachrichtenübertragungssystem den störenden Einfluß der Nachrichtenmodulation auf das angepaßte Filter bzw. das Korrelationsnetzwerk zu beseitigen, zumindest aber zu verringern, so daß man in der Möglichkeit einer im Hinblick auf die Störunterdrückung im Nachrichtenkanal optimalen Systemauslegung und in der Wahl der Verzögerungszeit $T$ nicht mehr engeschränkt ist. Gemäß der Erfindung wird diese Aufgabe dadurch gelöst, daß eine Entmodulationsschaltung vorgesehen ist, der einerseits das gesamte Signal, d. h. das die Nachrichtenmodulation und die pseudozufällige Phasensprungmodulation enthaltende Signal, und andererseits das nach der Phasenumtastung vorliegende Signal, d. h. das nur die Nachrichtenmodulation enthaltende Signal, zugeführt wird und der zur Eingabe in das angepaßte Filter bzw. das Korrelationsnetzwerk ein Signal entnommen wird, das nur noch die im Empfangssignal enthaltene pseudozufällige Phasensprungmodulation, nicht mehr jedoch die Nachrichtenmodulation aufweist. Das im angepaßten Filter bzw. im Korrelationsnetzwerk zu verarbeitende Signal ist somit vorher von der schmalbandigen Nachrichtenmodulation befreit. Es sind dann auch Verzögerungszeiten $T$ sinnvoll, die den Wert 1/B wesentlich überschreiten. Dies ist im Interesse einer möglichst großen Verbesserung des Signal-Stör-Verhältnisses durch das angepaßte Filter bzw. durch das Korrelationsnetzwerk wünschenswert.

Die Erfindung wird im folgenden anhand von sechs Figuren näher erläutert. Es zeigen

Figur 1 das prinzipielle Blockschaltbild eines PN-PSK-Empfängers mit einer Einrichtung zum Beseitigen der Nachrichtenmodulation,

Figur 2 eine bei einer Synchronisierschaltung für die empfangsseitig erzeugte Pseudozufallsfolge eingesetzte Korrelationsschaltung mit angezapfter Verzögerungsleitung,

Figur 3 eine vollständige empfängerseitige Synchronisierschaltung mit einer Einrichtung zum Beseitigen der Nachrichtenmodulation nach Erfindung,

Figuren 4 und 5 Signalverläufe betreffend die Synchronisierschaltung,

Figur 6 das Ausführungsbeispiel einer Einrichtung zum Beseitigen der Nachrichtenmodulation.

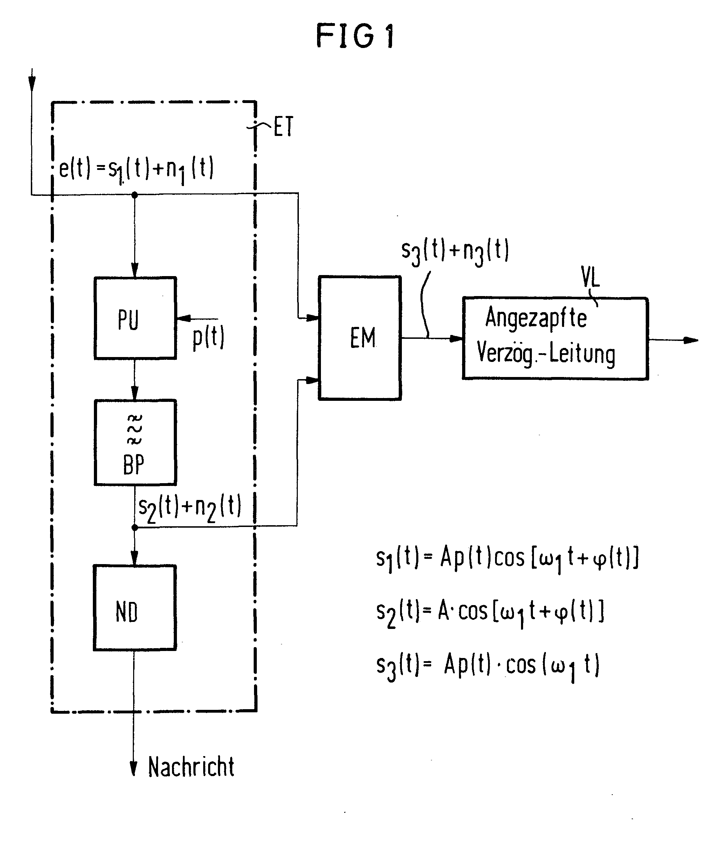

Fig. 1 zeigt das Prinzip der Einrichtung zum Beseitigen der Nachrichtenmodulation im Rahmen eines Spread-Spectrum-Empfängers für Signale mit pseudozufälliger Phasensprungmodulation. Die Funktion des gestrichelt eingerahmten Empfängerteils ET mit einem Phasenumtaster PU, einem Störunterdrückungsbandpaß BP und einem Nachrichtendemodulator ND wird als bekannt vorausgesetzt. Dazu wird auf den eingangs erwähnten Aufsatz von W.P. Baier hingewiesen. Zunächst seien das Störsignal $n_1(t)$ und damit auch die Störsignale $n_2(t)$ und $n_3(t)$ Null. Es seien nur die erwünschten Signale $s_1(t)$, $s_2(t)$ und $s_3(t)$ vorhanden.

Das bandkomprimierte Ausgangssignal $s_2(t)$ des Störunterdrückungsbandpasses BP enthält als Modulation nur noch die Nachrichtenmodulation $\varphi(t)$, nicht mehr jedoch die durch $p(t)$ gegebene pseudozufällige Phasensprungmodulation. Aus diesem Grund ist es möglich, aus den Signalen $s_1(t)$ und $s_2(t)$ durch eine nichtlineare Operation in der im folgenden mit « Entmodulator » EM bezeichneten Schaltung ein Signal der Form

$$s_3(t) = A \cdot p(t) \cdot \cos(\omega_3 t) \qquad (3)$$

zu erzeugen. Die Kreisfrequenz $\omega_3$ ist je nach Schaltungsauslegung wählbar ; z. B. läßt sich $\omega_3 = \omega_1$ erzielen. Das Signal $s_3(t)$ enthält nur noch die pseudozufällige Phasensprungmodulation, nicht mehr jedoch die Nachrichtenmodulation $\varphi(t)$. $s_3(t)$ kann somit in einer angezapften Verzögerungsleitung VL

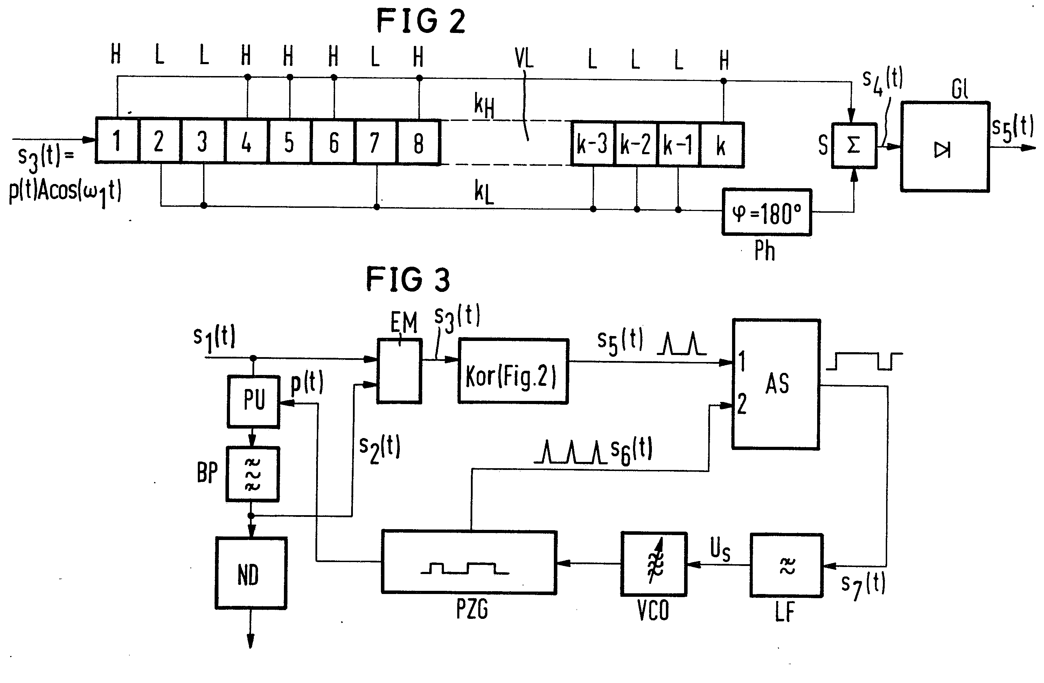

beliebig großer Gesamtverzögerungszeit T verarbeitet werden, ohne daß eine Degradation durch die Nachrichtenmodulation $\varphi(t)$ eintritt. Das Ausgangssignal der angezapften Verzögerungsleitung VL kann man zur Synchronisation des lokalen Pseudozufallsgenerators verwenden. Eine solche Synchronisiereinrichtung ist in der deutschen Patentanmeldung P 27 42 696.6 vorgeschlagen und wird im folgenden anhand der Fig. 2 bis 5 erläutert.

Fig. 2 zeigt schematisch eine angezapfte Verzögerungsleitung VL einschließlich der zusätzlich erforderlichen Beschaltung. Das Eingangssignal $s_3(t)$ der Verzögerungsleitung hat die Trägerfrequenz $\omega_1/(2\pi)$ und die Amplitude A. Seine Phase wechselt im Rhythmus der binären, periodisch aufgebauten Pseudozufallsfolge $p(t)\varepsilon \{1,-1\}$ zwischen 0° und 180°. Somit ist

$$s_3(t) = p(t) \cdot A \cdot \cos(\omega_1 t) \qquad (4)$$

Die Pseudozufallsfolge $p(t)$ hat die Taktfrequenz $f_c = 1/T_c$. Die Verzögerungsleitung weist k Anzapfungen im «zeitlichen» Abstand $T_c$ auf. Nach Maßgabe eines Ausschnittes (der Auschnitt kann im Grenzfall auch die ganze Periode der Pseudozufallsfolge umfassen) der Länge k der Folge $p(t)$ wird ein Teil $k_H$ der Ausgangssignale der Verzögerungsleitung VL unmittelbar, ein Teil $k_L = k - k_H$ nach einer in einem Phasendrehglied Ph durchgeführten Phasendrehung von 180° einem Summierglied S zugeführt. An dessen Ausgang steht ein Signal $s_4(t)$ an, das ebenfalls die Trägerfrequenz $\omega_1/(2\pi)$ aufweist. Im allgemeinen ist die Amplitude des Signals $s_4(t)$ relativ klein. Lediglich dann, wenn die Phasensprünge des gerade in der Verzögerungsleitung VL vorliegenden Ausschnitts des Signals $s_3(t)$ zu dem in die Verzögerungsleitung VL einprogrammierten Ausschnitt (im dargestellten Fall HLLHHHLH ... LLH) der Pseudozufallsfolge passen, hat das Signal $s_4(t)$ eine größere Amplitude. Die maximale Amplitude ist in diesem Fall bei Vernachlässigung der stets vorhandenen Grunddämpfung kA.

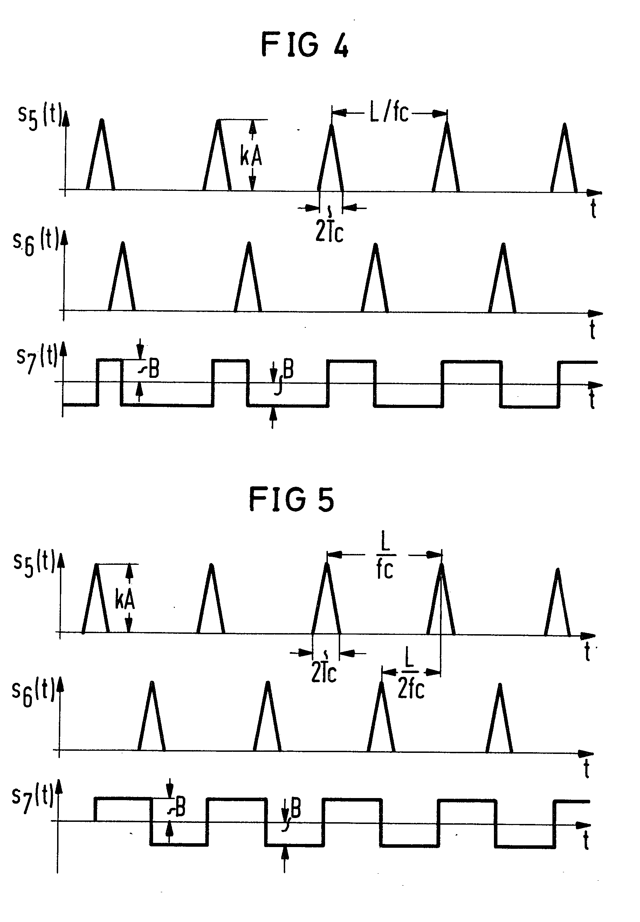

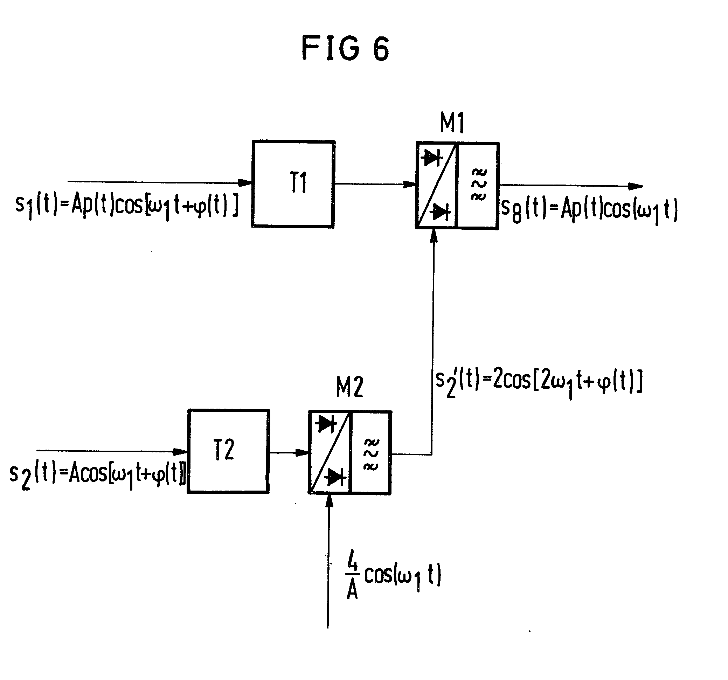

Nach einer Gleichrichtung in einem Gleichrichter GI des am Summiererausgang vorliegenden Signals $s_4(t)$ erhält man das in den Fig. 4 und 5 jeweils in der oberen Zeile dargestellte Signal $s_5(t)$. Das Signal $s_5(t)$ verläuft periodisch mit der Periode $LT_c$, wobei L die Länge der Pseudozufallsfolge $p(t)$ ist. Die einzelnen Spitzenimpulse des Signals $s_5(t)$ haben eine Dauer von etwa $2 T_c$.

Im folgenden wird das in Fig. 3 dargestellte Blockschaltbild einer empfängerseitigen Synchronisierschaltung für PN-PSK-Signale mit einer Einrichtung zur Beseitigung der Nachrichtenmodulation erläutert. Das Empfangssignal ohne das Störsignal $n_1(t)$ sei $s_1(t)$ nach (1). Dieses Signal $s_1(t)$ wird einem Eingang der Entmodulatorschaltung EM zugeführt. Das zweite Eingangssignal $s_2(t)$ der Entmodulatorschaltung EM wird über den Phasenumtaster PU vom Störunterdrückungsbandpaß BP abgeleitet. Das Ausgangssignal $s_3(t)$ wird einer entsprechend der Anordnung nach Fig. 2 ausgebildeten Korrelationsschaltung Kor mit angezapfter Verzögerungsleitung zugeführt. Am Ausgang dieser Korrelationsschaltung Kor steht das periodische Signal $s_5(t)$ nach Fig. 4 und 5, jeweils oberste Zeile, an. Ein von einem spannungsgesteuerten Taktgenerator VCO getakteter Pseudozufallsgenerator PZG des Empfängers erzeugt die gleiche Pseudozufallsfolge wie der sendeseitige Pseudozufallsgenerator. Beide Pseudozufallsfolgen haben jedoch im Empfänger im allgemein eine gewisse Epochendifferenz $\varepsilon \cdot \varepsilon$ sei die Voreilung der im Empfangssignal $s_1(t)$ enthaltenen Pseudozufallsfolge $p(t)$ gegenüber der im Empfänger erzeugten Pseudozufallsfolge, modulo $L/f_c$.

Aus dem empfängerseitigen Pseudozufallsgenerator PZG wird ein Signal $s_6(t)$ abgeleitet, das prinzipiell denselben Verlauf hat wie das Signal $s_5(t)$. Die Spitzen des Signals $s_6(t)$ treten jedoch immer dann auf, wenn in den Schieberegisterstufen des Pseudozufallsgenerators PZG gerade jener Ausschnitt der im Empfänger erzeugten Pseudozufallsfolge ist, der sich von dem in die angezapfte Verzögerungsleitung (VL in Fig. 2) einprogrammierten Ausschnitt um $L/2$ (L ist die Länge der Pseudozufallsfolge $p(t)$) unterscheidet. Wenn kein Synchronismus herrscht ($\varepsilon \neq 0$), verlaufen die Signale $s_5(t)$ und $s_6(t)$ somit, wie in Fig. 4 dargestellt, mit unterschiedlicher Periode. Bei Synchronismus ($\varepsilon = 0$) haben die Signale $s_5(t)$ und $s_6(t)$ dagegen gleiche Periode und die in Fig. 5 dargestellte zeitliche Zuordnung. In diesem Fall treten die Spitzen der Signale $s_5(t)$ und $s_6(t)$ abwechselnd und zeitlich äquidistant auf. Der zeitliche Abstand zwischen benachbarten Spitzen der Signale $s_5(t)$ und $s_6(t)$ beträgt dann $L/(2f_c)$.

Die Signale $s_5(t)$ und $s_6(t)$ werden, wie Fig. 3 zeigt, jeweils einem Eingang 1 bzw. 2 eines Phasendetektors AS zugeführt. Das Ausgangssignal $s_7(t)$ des Phasendetektors AS springt beim Auftreten einer Spitze des Signals $s_5(t)$ auf den Wert $s_7(t) = B(> 0)$, bei Auftreten einer Spitze des Signals $s_6(t)$ auf den Wert $s_7(t) = -B$. Man erhält dann die in den Fig. 4 und 5 jeweils in der untersten Zeile dargestellten Verläufe des Signals $s_7(t)$ für die Fälle «nichtsynchron» ($\varepsilon \neq 0$) bzw. «synchron» ($\varepsilon = 0$). Im Falle $\varepsilon = 0$ hat das Signal $s_7(t)$ den Mittelwert Null. Wenn dem Empfangssignal $s_1(t)$ ein Störsignal $n_1(t)$ überlagert ist, muß im Phasendetektor AS für das Signal $s_5(t)$ eine Schwellenschaltung vorgesehen werden.

Die im Signal $s_7(t)$ enthaltene Gleichspannung wird dazu benutzt, die Frequenz des Taktgenerators VCO so nachzustellen, daß zunächst der Zustand $\varepsilon = 0$ herbeigeführt und dann auch aufrechterhalten wird. Zu diesem Zweck wird das Signal $s_7(t)$ über ein Schleifen-Filter LF dem Steuereingang des Taktgenerators VCO zugeführt. Der Taktgenerator VCO habe bei verschwindender Steuerspannung $U_s$ die Taktfrequenz $f_{VCO} = f_c$. Außerdem sei beispielsweise $df_{VCO}/dU_s > 0$. Dann wird der Taktgenerator VCO bei einer Epochendifferenz $0 < \varepsilon < L/(2f_c)$ so lange eine Taktfrequenz $f_{VCO} > f_c$ haben, bis $\varepsilon = 0$ erreicht ist. Bei einer Epochendifferenz $L/(2f_c) < \varepsilon < L/f_c$ wird so lange $f_{VCO} < f_c$ sein, bis ebenfalls $\varepsilon = 0$ erreicht ist. Anschließend hält die aus dem Taktgenerator VCO, dem Pseudozufallsgenerator PZG, dem Phasendetektor AS und dem Schleifen Filter LF bestehende Regelschleife die Epochendifferenz auf Null. Bei Synchronisationsverlust, beispielsweise infolge einer Signalunterbrechung, führt die Schaltung automatisch einen neuen Akquisitionsvorgang durch.

Nachdem die Epochendifferenz auf $\varepsilon = 0$ geregelt ist, können in dem vom Eingangssignal $s_1(t)$ beaufschlagten Phasenumtaster PU mit der lokal im Empfänger erzeugten Pseudozufallsfolge die Phasensprünge des Empfangssignals $s_1(t)$ rückgängig gemach werden. Die weitere Signalverarbeitung im Empfänger (ND = Nachrichtendemodulator) erfolgt in üblicher Weise.

Das beschriebene Empfängerkonzept nach den Fig. 2 bis 5 hat den Vorteil, daß die Akquisition, das Aufrechterhalten des Synchronismus sowie das erneute Einleiten eines Akquisitionsvorgangs nach Synchronisationsverlust von einer einzigen relativ einfachen Schaltung übernommen werden. Die Störsicherheit läßt sich dadurch zusätzlich erhöhen, daß nach gelungener Akquisition der Eingang 1 des Phasendetektors AS nur in jenen Zeitbereichen aktiviert wird, in denen die Spitzen des Signals $s_5(t)$ zu erwarten sind.

Eine mögliche Ausführungsform der Schaltung EM zur Entmodulation ist in Fig. 6 dargestellt. Zum Ausgleich von Laufzeitunterschieden werden die beiden Eingangsignale $s_1(t)$ und $s_2(t)$ zunächst über die Verzögerungsglieder $T_2$ und $T_1$ geschickt. In einem Mischer M2 mit nachgeschaltetem Bandfilter wird aus dem Signal $s_2(t)$ das Signal

$$s'_2(t) = 2 \cos [2\omega_1 t + \varphi(t)] \qquad (5)$$

erzeugt. Das Signal $s_2'(t)$ wird in einem Mischer M1 mit nachgeschaltetem Bandfilter mit dem Signal $s_1(t)$ zum Signal

$$s_3(t) = A \cdot p(t) \cdot \cos (\omega_1 t) \qquad (4)$$

gemischt. In diesem Signal ist die Nachrichtenmodulation $\varphi(t)$ nicht mehr enthalten, sondern nur noch die pseudozufällige Phasensprungmodulation. Das Signal $s_3(t)$ ist deshalb zur Weiterverarbeitung in einem angepaßten Filter auf der Basis akustischer Oberflächenwellen geeignet. Bemerkenswert ist, daß durch die genannten Maßnahmen auch degradierende Auswirkungen des Dopplereffekts vermieden werden können.

In der Praxis muß man davon ausgehen, daß dem empfangenen Signal $s_1(t)$ ein Störsignal $n_1(t)$ überlagert ist. Das Störsignal $n_1(t)$ bewirkt am Ausgang des Störunterdrückungsbandpasses BP das Störsignal $n_2(t)$. Da in der Entmodulationsschaltung EM die Signale $s_1(t) + n_1(t)$ sowie $s_2(t) + n_2(t)$ miteinander nichtlinear verknüpft werden, ist das Signal-Stör-Verhältnis $\gamma_3$ des Signals $s_3(t) + n_3(t)$ kleiner als das Signal-Stör-Verhältnis $\gamma_1$ des Signals $s_1(t) + n_1(t)$. Die Maßnahme der « Entmodulation » ist also mit einer zusätzlichen Degradation verbunden. Das Eingangssignal der angezapften Verzögerungsleitung VL ist zwar von der Nachrichtenmodulation befreit, sein Signal-Stör-Verhältnis ist jedoch kleiner als das Signal-Stör-Verhältnis des Signals $e(t)$ am Empfängereingang. Im folgenden soll diese Degradation abgeschätzt werden.

Die Leistungen der erwünschten Signale $s_{1,2,3}$ werden mit $S_{1,2,3}$ bezeichnet, die Leistungen der Störsignale $n_{1,2,3}$ mit $N_{1,2,3}$. Wenn der Spread-Spectrum-Empfänger den Prozeßgewinn $g$ hat, ist mit einer Konstanten $k_a$ näherungsweise

$$S_2 = k_a \cdot S_1, \qquad (6)$$

$$N_2 = k_a \cdot N_1/g. \qquad (7)$$

Weiterhin ist mit einer Konstanten $k_b$ näherungsweise

$$S_3 = k_b S_1 S_2, \qquad (8)$$

$$N_3 = k_b (S_1 N_2 + S_2 N_1 + N_1 N_2). \qquad (9)$$

Aus (8) und (9) erhält man mit (6) und (7)

$$S_3 = k_a k_b S^2_1, \qquad (10)$$

$$N_3 = k_a k_b (S_1 N_1/g + S_1 N_1 + N^2_1/g). \qquad (11)$$

Mit dem Signal-Stör-Verhältnis

$$\gamma_1 = S_1/N_1 \qquad (12)$$

am Empfängereingang erhält man das Signal-Stör-Verhältnis

$$\gamma_3 = \frac{S_3}{N_3} = \frac{S^2_1}{S_1N_1/g + S_1N_1 + N^2_1/g} = \gamma_1 \cdot \frac{1}{1 + 1/\gamma_1 g + 1/g} \qquad (13)$$

am Ausgang des Entmodulators.

Aus (13) folgt, daß die Degradation aufgrund der Entmodulatorschaltung EM vernachlässigbar ist, solange

1) der Prozeßgewinn g >> 1 ist

2) das Signal-Stör-Verhältnis $g\gamma_1$ am Ausgang des Störunterdrückungsbandpasses wesentlich größer als 1 ist, $g\gamma_1$ >> 1.

Beide Bedingungen sind bei praktischen Systemen im allgemeinen erfüllt, so daß die zusätzliche Degradation unbedeutend ist.

Für die Funktion des Konzepts nach Fig. 1 ist es unerläßlich, daß die lokale Pseudozufallsfolge p(t) an einem der Eingänge des Phasenumtasters PU zur Verfügung steht. Das Gesamtsystem muß also gerastet sein. Wenn das Ausgangssignal der angezapften Verzögerungsleitung VL für die Einleitung der Synchronisation des Systems erforderlich ist, muß zunächst ohne Nachrichtenmodulation $\varphi(t)$ gesendet werden, und zwar so lange, bis die Synchronisation gelungen ist. Diese Forderung muß unter Umständen auch bei anderen Synchronisationskonzepten für Spread-Spectrum-Empfänger gestellt werden.

Wie sich aus Fig. 6 ersehen läßt, ist die Mittenfrequenz des Signals $s_3(t)$ unabhängig von der momentanen Mittenfrequenz des Empfangssignals $s_1(t)$ und stets gleich $\omega_1/(2\pi)$. Deshalb ist die Komponente EM auch dazu geeignet, eventuelle Frequenzablagen des Empfangssignals infolge Oszillatordrift oder Dopplereffekt zu kompensieren.

**Ansprüche**

1. Empfangsschaltung für die Synchronisierung eines Pseudozufallsgenerators mit einem von einem Sender stammenden Empfangssignal in einem störunterdrückenden Nachrichtenübertragungssystem mit schmalbandiger konventioneller Nachrichtenmodulation und zusätzlicher pseudozufälliger Phasensprungmodulation, wobei die sich fortlaufend wiederholende Pseudozufallsfolge des Pseudozufallsgenerators in Übereinstimmung mit der sendeseitigen Pseudozufallsfolge aus einer scheinbar zufälligen Aneinanderreihung der binären Werte L und H in einem festen Taktschema besteht und einen die sendeseitig aufgebrachte Phasensprungmodulation rückgängig machenden Phasenumtaster (PU) betätigt, und mit einem angepaßten Filter oder Korrelationsnetzwerk, z. B. einer angezapften Verzögerungseinrichtung (VL) oder einem Konvolver, zur Erzeugung eines Korrelationsimpulses, der immer dann auftritt, wenn die im Empfangssignal enthaltene Pseudozufallsfolge eine bestimmte Stelle des Pseudozufallscodes erreicht, oder wenn das Faltungsintegral der im Empfangssignal enthaltenen Pseudozufallsfolge und der empfängerseitig erzeugten Pseudozufallsfolge ein Maximum annimmt, dadurch gekennzeichnet, daß eine Entmodulationsschaltung (EM) vorgesehen ist, der einerseits das gesamte empfangene Signal, d. h. das die Nachrichtenmodulation und die pseudozufällige Phasensprungmodulation enthaltende Signal, und andererseits das nach der Phasenumtastung vorliegende Signal, d. h. das nur die Nachrichtenmodulation enthaltende Signal, zugeführt wird und der zur Eingabe in das angepaßte Filter bzw. das Korrelationsnetzwerk ein Signal entnommen wird, das nur noch die im Empfangssignal enthaltene pseudozufällige Phasensprungmodulation, nicht mehr jedoch die Nachrichtenmodulation aufweist.

2. Empfangsschaltung nach Anspruch 1, dadurch gekennzeichnet, daß zur Korrelation eine Verzögerungsleitung (VL), insbesondere für akustische Oberflächenwellen, mit k Anzapfungen vorgesehen ist, deren jeweiliger zeitlicher Abstand dem Kehrwert der Taktfrequenz der Pseudozufallsfolge entspricht, daß ein erster Teil der Anzapfungen unmittelbar und ein zweiter Teil der Anzapfungen über ein Phasendrehglied (Ph) von 180° mit der Eingangsseite eines Summiergliedes (S) verbunden ist, wobei die Programmauswahl der Anzapfungen für die beiden Teile so vorgenommen ist, daß der eine Teil den L-Werten und der andere Teil den H-Werten der binären Pseudozufallsfolge oder eines Ausschnitts derselben entspricht, und daß das über einen Gleichrichter (Gl) geführte und die Form eines Pulses aufweisende Ausgangssignal des Summiergliedes (S) dem einen Eingang eines Phasendetektors (AS) und ein aus dem empfangsseitig angeordneten Pseudozufallsgenerator (PZG) periodisch während jeder von ihm erzeugten Pseudozufallsfolge abgeleitetes und in geeignete Impulsform aufbereitetes Signal einem zweiten Eingang dieses Phasendetektors (AS) eingegeben werden, der als Ausgangsspannung eine von der gegenseitigen Phasenlage der beiden eingegebenen Signale abhängige Regelspannung zur Nachstellung der Taktfrequenz des empfangsseitig angeordneten Pseudozufallsgenerators (PZG) abgibt.

3. Empfangsschaltung nach Anspruch 1 oder 2, dadurch gekennzeichnet, daß die Entmodulationsschaltung (EM) einen ersten Mischer (M2), dem zur Mischung zum einen das nach der Phasenumtastung vorliegende Signal und zum anderen ein mit einer konstanten Frequenz schwingendes unmoduliertes

Signal zugeführt wird, und einen zweiten Mischer (M1) aufweist, dem zur Mischung zum einen das gesamte empfangene Signal und zum anderen das Ausgangssignal des ersten Mischers (M2) eingegeben wird und dessen Ausgangssignal das in das angepaßte Filter bzw. Korrelationsnetzwerk einzugebende Signal darstellt.

4. Empfangsschaltung nach Anspruch 3, dadurch gekennzeichnet, daß zum Ausgleich von Laufzeitunterschieden das nach der Phasenumtastung vorliegende Signal vor der Eingabe in den ersten Mischer (M2) über ein Verzögerungsglied (T2) und das gesamte empfangene Signal vor der Eingabe in den zweiten Mischer (M1) über ein anderes Verzögerungsglied (T1) geführt wird.

5. Empfangsschaltung nach einem der vorhergehenden Ansprüche, dadurch gekennzeichnet, daß dem Phasenumtaster (PU) ein Störunterdrückungsbandpaß (BP) nachgeschaltet ist und erst nach diesem Bandpaß (BP) das nur die Nachrichtenmodulation enthaltende Signal zur Eingabe in die Entmodulationsschaltung (EM) abgenommen wird.

## Claims

1. Receiving circuit for the synchronisation of a pseudorandom generator with a received signal emanating from a transmitter in an interference suppressing communications transmission network featuring narrow band conventional communications modulation and additional pseudo-random phase shift modulation, wherein, in conformity with the transmitting end pseudo-random sequence, the continuously repetitive pseudo-random sequence of the pseudo-random generator comprises an apparently random sequence of the binary values L and H in a fixed clock pulse scheme and actuates a phase shifter (PU) which cancels the phase shift modulation which has been effected at the transmitting end, and further comprising a matched filter or correlation network, e. g. a tapped delay device (VL) or a convolver, for the generation of a correlation pulse which occurs whenever the pseudo-random sequence contained in the received signal reaches a specific position of the pseudo-random code or when the convolution integral of the pseudo-random sequence contained in the received signal and of the pseudo-random sequence produced at the receiving end assumes a maximum, characterised in that a demodulation circuit (EM) is provided which is supplied on the one hand with the total received signal, i. e. the signal which comprises the communications modulation and the pseudo-random phase shift modulation, and on the other hand is supplied with the signal which prevails following the phase shift operation i. e. the signal which comprises only the communications modulation, and from which a signal is obtained for input into the matched filter or correlation network, which signal comprises only the pseudo-random phase shift modulation contained in the received signal but no longer the communications modulation.

2. Receiving circuit as claimed in claim 1, characterised in that for correlation purposes a delay line (VL), in particular for audio surface waves, is provided with k tappings the mutual time spacing of which corresponds to the inverse value of the clock pulse frequency of the pseudo-random sequence, that a first section of the tappings is connected directly to the input end of an adder (S) whereas a second section of the tappings is connected thereto via a phase rotating element (Ph) of 180°, where the programme selection of the tappings for the two sections is effected in such manner that one section corresponds to the L-values and the other section to the H-values of the binary pseudo-random sequence or a section thereof, and that the output signal from the adder (S) which is fed via a rectifier (GI) and is in the form of a pulse is input into the first input of a phase detector (AS), whereas a signal which is derived periodically from the pseudo-random generator (PZG) arranged at the receiving end, during each pseudo-random sequence which it generates and which is prepared in suitable pulse form, is input into a second of this phase detector (AS) which emits, by way of output voltage, a regulating voltage which is dependent upon the mutual phase position of the two input signals and which serves to adjust the clock pulse frequency of the pseudo-random generator (PZG) arranged at the receiving end.

3. Receiving circuit as claimed in claim 1 or 2, characterised in that the demodulation circuit (EM) comprises a first mixer (M2) which, for mixing, is supplied on the one hand which the signal which prevails following the phase shift operation and on the other hand with an unmodulated signal which oscillates at a constant frequency and further comprises a second mixer (M1) which, for mixing purposes, is supplied on the one hand with the total received signal and on the other hand with the output signal from the first mixer (M2) and whose output signal represents the signal which is to be input into the matched filter or correlation network.

4. Receiving circuit as claimed in claim 3, characterised in that in order to compensate transit time differences, before it is input into the first mixer (M2) the signal which prevails following the phase shift operation is fed via delay element (T2), and before it is input into the second mixer (M1) the total received signal is fed via another delay element (T1).

5. Receiving circuit as claimed in one of the preceding claims, characterised in that the phase shifter (PU) is followed by an interference suppression band pass filter (BP) and only following this band pass filter (BP) is taken off the signal which comprises only the communications modulation output for input into the demodulation circuit (EM).

**0 012 394**

Revendications

1. Circuit récepteur pour la synchronisation d'un générateur pseudo-aléatoire avec un signal de réception provenant d'un émetteur dans un système de transmission d'informations antiparasité à modulation des informations conventionnelle à bande étroite et à modulation par changement brusque de la phase, la succession pseudo-aléatoire du générateur pseudo-aléatoire, qui se répète continuellement, étant constituée, en concordance avec la succession pseudo-aléatoire du côté émission, d'une suite apparemment forfuite des valeurs binaires L et H suivant un schéma de cadence fixe et commande un manipulateur de déphasage (PU) supprimant la modulation par changement brusque de phase réalisée du côté émission, et avec un filtre ou un réseau de corrélation adapté, par exemple avec un dispositif à retard à prises de branchement ou avec un dispositif de transformation de convolution, pour produire une impulsion de corrélation qui apparaît toutes les fois que la succession pseudo-aléatoire contenue dans le signal de réception atteint un emplacement déterminé du code pseudo-aléatoire, ou si l'intégrale de convolution de la succession pseudo-aléatoire contenue dans le signal de réception et la succession pseudo-aléatoire produite du côté réception admet un maximum, caractérisé par le fait qu'il est prévu un circuit de démodulation (EM) auquel est appliquée d'une part la totalité du signal reçu, c'est-à-dire le signal contenant la modulation des informations et la modulation par changement brusque de la phase, et, d'autre part, le signal qui est présent après la manipulation de déphasage, c'est-à-dire le signal qui ne contient que la modulation des informations, et duquel on prélève, pour l'appliquer au filtre adapté ou réseau de corrélation, un signal qui ne présente plus que la modulation pseudo-aléatoire du changement brusque de la phase, contenue dans le signal de réception, sans toutefois présenter la modulation d'information.

2. Circuit récepteur selon la revendication 1, caractérisé par le fait que pour la corrélation il est prévu une ligne à retard (VL), plus particulièrement pour des ondes acoustiques de surface, avec k prises, et dont l'écart temporel considéré correspond à la valeur inverse de la fréquence de la cadence de la succession pseudo-aléatoire, qu'une première partie des prises est reliée directement et une seconde partie de prises est reliée, par l'intermédiaire d'un déphaseur (Ph) de 180°, au côté entrée d'un dispositif de sommation (S), la sélection de programme des prises pour les deux parties étant opérée de telle manière que la première partie correspond aux valeurs L et l'autre partie aux valeurs H de la succession pseudo-aléatoire linéaire ou à une portion de celle-ci, et que le signal de sortie du dispositif de sommation (S) passant par un redresseur (G1) et présentant la forme d'une impulsion soit appliqué à une première entrée d'un détecteur de phase (AS) et qu'un signal dérivé du générateur pseudo-aléatoire disposé du côté réception, périodiquement pendant chaque succession aléatoire produite par ce dernier et élaborée suivant une forme impulsionnelle appropriée, soit appliqué à une seconde entrée de ce détecteur de phase (AS) qui fournit comme tension de sortie une tension de réglage qui dépend de la position réciproque des phases des deux signaux appliqués et qui sert à réajuster la fréquence de cadence du générateur pseudo-aléatoire (PZG) disposée du côté réception.

3. Circuit récepteur selon la revendication 1 ou 2, caractérisé par le fait que le circuit de démodulation (EM) comporte un premier mélangeur (M2) auquel on applique, pour le mélange, d'une part le signal qui est présent après la manipulation de déphasage et, d'autre part, un signal non modulé oscillant à une fréquence constante, et un second mélangeur (M1) auquel on applique, pour le mélange, d'une part le signal total reçu et, d'autre part, le signal de sortie du premier mélangeur (M2), et dont le signal de sortie représente le signal à appliquer au filtre adapté ou aux réseaux de corrélation.

4. Circuit récepteur selon la revendication 3, caractérisé par le fait que pour compenser les différences des durées de transit, le signal qui est présent après la manipulation de déphasage, et avant son application au premier mélangeur (M2), passe par un dispositif à retard (T2) et le signal reçu passe, avant son application au second mélangeur (M1) par un autre dispositif à retard (T1).

5. Circuit récepteur selon l'une des revendications antérieures, caractérisé par le fait qu'en aval du manipulateur de déphasage (PU) est monté un passe-bande de suppression de parasite (BP) et ce n'est qu'après ce passe-bande (BP) qu'est prélevé le signal ne comportant que la modulation d'information pour être appliquée au circuit de démodulation (EM).

# FIG 1

$e(t) = s_1(t) + n_1(t)$

ET

PU

$\overline{p(t)}$

$\approx$
$\approx$
BP

$s_2(t) + n_2(t)$

ND

Nachricht

$s_3(t) + n_3(t)$

EM

VL

Angezapfte
Verzög.-Leitung

$s_1(t) = Ap(t)\cos[\omega_1 t + \varphi(t)]$

$s_2(t) = A \cdot \cos[\omega_1 t + \varphi(t)]$

$s_3(t) = Ap(t) \cdot \cos(\omega_1 t)$

# FIG 2

$$s_3(t) = p(t)A\cos(\omega_1 t)$$

# FIG 3

0 012 394

# FIG 4

# FIG 5

# FIG 6

M1

$s_1(t)=Ap(t)\cos[\omega_1 t+\varphi(t)]$

T1

$s_8(t)=Ap(t)\cos(\omega_1 t)$

$s_2'(t)=2\cos[2\omega_1 t+\varphi(t)]$

M2

$s_2(t)=A\cos[\omega_1 t+\varphi(t)]$

T2

$\dfrac{4}{A}\cos(\omega_1 t)$

4